Europäisches Patentamt

European Patent Office

Office européen des brevets

(11) Publication number: **0 480 524 A2**

## EUROPEAN PATENT APPLICATION

(21) Application number: **91202611.9**

(22) Date of filing: **08.10.91**

(51) Int. Cl.5: **C08L 67/02**, C08K 7/14,
//(C08L67/02,87:00,25:18)

(30) Priority: **11.10.90 NL 9002213**

(43) Date of publication of application:
**15.04.92 Bulletin 92/16**

(84) Designated Contracting States:
**DE ES FR GB IT NL**

(71) Applicant: **GENERAL ELECTRIC COMPANY**
**1 River Road**
**Schenectady, NY 12345(US)**

(72) Inventor: **Goff, Leslie Joe, General Electric**
**Plastics B.V.**
**P.O. Box 117**
**NL-4600 AC Bergen op Zoom(NL)**

(74) Representative: **Schüler, Horst, Dr. et al**
**General Electric Praunheimer Landstrasse**
**50**
**W-6000 Frankfurt 90(DE)**

(54) **Polymer mixture comprising polybutylene terephtalate, thermoplastic elastomer, and a brominated polystyrene; articles formed therefrom.**

(57) The invention relates to polymer mixtures which comprise a polybutylene terephthalate, a thermoplastic elastomer, a halogenated flame retardant additive and glass fibres having a length of less than 200 micrometres and a diameter of less than 25 micrometres. The polymer mixtures according to the invention have a combination of the following favourable properties: satisfactory rigidity, a reasonable flow of the melt, good flame-retarding properties and a high tracking index.

The invention relates to a polymer mixture which comprises the following constituents:

A. a polybutylene terephthalate;

B. a thermoplastic elastomer;

C. an halogenated flame retardant additive.

The invention also relates to articles formed from the polymer mixture according to the invention. Polymer mixtures which comprise a polybutylene terephthalate and a thermoplastic elastomer, for example, a polyetherester block copolymer, are known, for example, from DE-C-2338615 and DE-B-2460257. The addition of flame-retardants is not mentioned in these publications.

The addition of flame-retarding, halogen-containing additives to polybutylene terephthalates is disclosed in EP-A-0065777. A large number of compounds are mentioned as suitable flame-retardants, including, for example, polycarbonate oligomers prepared starting from brominated bisphenol A and brominated polystyrene.

Polymer mixtures which comprise a polybutylene terephthalate a halogenated flame retardant additive such as a brominated polystyrene, an aromatic polycarbonate and an agent to improve the impact strength are disclosed in EP-A-0322934. The polymer mixtures just mentioned have a good tracking index and good flame-retarding properties.

Polymer mixtures which comprise a polybutylene terephthalate, a thermoplastic elastomer and a halogenated flame retardant additive such as a brominated polystyrene as a flame-retardant are described in non-prepublished EP-A-0392190. These known polymer mixtures have a good combination of properties: a good flexibility, a good flow of their melt, good flame-retarding properties and a high tracking index. According to the general teaching of EP-A-0392190, conventional additives, for example, reinforcing fibres, may be added to the polymer mixtures. For example, if a polymer mixture having a greater rigidity is to be obtained, conventional glass fibres will be added. However, Applicants' experiments have demonstrated that, although the addition of conventional glass fibres leads to an increase of the rigidity, it also results in a strong decrease of the flow properties and a remarkable reduction of the tracking index.

The invention is based on the discovery that the rigidity can be improved without too strong a reduction of the flow and/or of the tracking index occurring by using a given type of glass fibres.

The polymer mixture according to the invention is characterised in that the polymer mixture comprises in addition (D) glass fibres having a length of less than 200 micrometres and a diameter of less than 25 micrometres.

The polymer mixture according to the invention preferably comprises as constituent B a polyether ester block copolymer, or a polyester-ester urethane or a polyether imide ester.

The composition of the polymer mixture according to the invention is preferably such that the polymer mixture comprises

45-70 parts by weight of constituent A,

5-25 parts by weight of constituent B,

10-30 parts by weight of constituent C, and

5-15 parts by weight of constituent D

per 100 parts by weight of the sum of the constituents A, B, C and D.

The polymer mixture according to the invention comprises as constituent A a polymer or a copolymer which is built up for more than 70 mol% from units derived from terephthalic acid and butane-1,4-diol.

It is possible to use a metal compound (for example, antimony oxide) which cooperates synergistically with the halogenated flame retardant additive in the polymer mixtures according to the invention.

The polymer mixture according to the invention may comprise 1-100 parts by weight of conventional additives per 100 parts by weight of A. plus B. plus C. plus D.

The polymer mixture according to the invention comprises at any rate the following constituents:

A. a polybutylene terephthalate,

B. a thermoplastic elastomer,

C. a halogenated flame retardant additive, and

D. a special type of glass fibres.

A. Polybutylene terephthalate

Polybutylene terephthalate is a polymer known per se. It is derived from butane-1,4-diol and terephthalic acid. It is possible to use in the polymer mixtures copolyesters in which a part of the diol compound and/or a part of the terephthalic acid has been replaced by another diol and/or carboxylic acid. For the polymer mixtures according to the invention it is to be preferred to use a polybutylene terephthalate which is built up for more than 70 mol% from units derived from butane-1,4-diol and terephthalic acid.

2

It is possible to use a polybutylene terephthalate in which a branching agent, for example, a glycol having three or more hydroxyl groups or a trifunctional or polyfunctional carboxylic acid has been incorporated.

B. Thermoplastic elastomer

Various types of thermoplastic elastomers may be used in the polymer mixture according to the invention. Examples are the polyether-ester block copolymers, polyester-ester urethanes and polyether imide esters known per se.

Polyether-ester block copolymers are generally obtained by condensation polymerisation of one or more dicarboxylic acids, one or more long-chain glycols and one or more short-chain glycols. Examples of suitable polyether-ester block copolymers are described in DE-C-2338615 and DE-B-2460258, as well as in the literature references cited therein.

As a polyester-ester urethane is preferably used a block copolymer which is built up from polyester-ester units which are bonded by means of groups of the formula R1 [NHC(O)]p, wherein R1 is a polyfunctional group having at most 30 carbon atoms and p has a value of 2 or 3, and in which the polyester-ester units are built up from blocks having a number of ester units of the formula - OGOC(O)R2C-(O) - and blocks having a number of ester units which are capable of forming a bifunctional polyester or polyester amide having a melting-point of less than 100 oC, which blocks are bonded together by ester bonds, at least 80 mol% of the R2 groups being 1,4-phenylene radicals and at least 80 mol% of the G-groups being a tetramethylene group.

Such polymers and their methods of preparation are disclosed, for example, in EP-A-0102115, US-A-4,186,257 and US-A-4,228,249.

As a polyether imide ester is preferably used a block copolymer obtained by reaction of a diol having a low molecular weight, a dicarboxylic acid, a poly(oxyalkylene)diamine and a tricarboxylic acid or a derivative thereof. Such polymers are described, for example, in US-A-4,544,734, US-A-4,556,705 and US-A-4,556,688.

C. Halogenated flame retardant additive.

Any known halogenated flame retardant suitable for blending with polybutyleneterephtalates may be used. Preferred are brominated polystyrenes and brominated epoxy resins.

Brominated polystyrenes are flame-retardants known per se for synthetic resins.They are commercially available. They may comprise, for example, approximately 40-70% by weight of bromine.

Examples of suitable brominated epoxyresins are the tetrabromo bisphenol A-diglycidyl ethers with a molecular weight of about 2,000 to 20,000.

D. Glass fibres

The polymer mixture according to the invention must comprise glass fibres having a length of less than 200 micrometres and a diameter of less than 25 micrometres. Such types of glass fibres are generally available.

In addition to the constituents mentioned hereinbefore the polymer mixture according to the invention may moreover comprise conventional additives. Suitable additives are pigments and dyes, stabilisers, transesterification inhibitors, flame-retardants, mould-release agents, etc.

The polymer mixture according to the invention can be obtained according to the conventional methods of preparing polymer mixtures, for example, by melt extrusion.

Example I, comparative examples A and B

The following constituents were used in the examples:

PBT: a polyester derived from butanediol and terephthalic acid having an intrinsic viscosity of 1.18 dl/g, measured in a 60/40 mixture of phenol/tetrachloroethane at 25°C.

TPE: a polyether imide ester commercially available as LOMOD® J10

FR: a brominated polystyrene having a bromine content of approximately 65% by weight.

Glass fibres-1: glas fibres having an average length of approximately 4-5 millimetres and an average diameter of approximately 10 micrometres.

Glass fibres-2: glass fibres having an average length of approximately 70 micrometres and an average diameter of 12 micrometres.

AOC: a mixture of 85% by weight of $Sb_2O_3$ and 15% of a carrier polymer.

T: a polytetrafluoroethylene compound.

O: a mixture of remaining conventionally used additives (stabiliser + mould release agent).

The constituents mentioned hereinbefore in the quantities as indicated in the table hereinafter were compounded in an extruder and pelletised. Standardised test pieces were injection-moulded from the resulting pellets to determine the combustibility class according to UL-94, to determine the "comparative tracking index" according to IEC, 1979 (3rd edition), and to determine a few mechanical properties. In addition the melt viscosity index (MVI) was determined.

The results obtained are also recorded in the table hereinafter.

## T A B L E

| Example no. | A | B | I |
|---|---|---|---|
| **Composition (parts by weight)** | | | |
| o PBT | 50 | 53 | 53 |
| o TPE | 25 | 15 | 15 |
| o glass fibres-1 | – | 7 | – |
| o glass fibres-2 | – | – | 7 |
| o FR | 17.5 | 17.5 | 17.5 |
| o AOC | 7 | 7 | 7 |
| o T | 0.25 | 0.25 | 0.25 |
| o O | 0.45 | 0.45 | 0.45 |
| | | | |
| **Properties** | | | |
| o Tensile module | 1500 | 2100 | 2190 |
| o Bending module | 1450 | 2045 | 2110 |
| o Comparative tracking index (V) | 325 | 275 | 325 |
| o UL-94 (1.6 mm rod) | V-0 | V-0 | V-0 |
| o MVI (250°C; 2.16 kg) | 22.4 | 14.5 | 17.5 |

It will be obvious from the results recorded in the above table that the addition of conventional glass fibres (comparative example B) results in an increase of the rigidity and in a considerable deterioration of the flow properties. Moreover the tracking index decreases.

By using special fibres (example I) a further improvement of the rigidity can even be obtained, while in addition the flow properties are deteriorated to a much lesser extent. The tracking index is also kept up.

## Claims

1. A polymer mixture which comprises the following constituents:
    A. a polybutylene terephthalate;
    B. a thermoplastic elastomer;
    C. a halogenated flame-retardant additive in which the polymer mixture moreover comprises
    D. glass fibres having a length of less than 200 micrometres and a diameter of less than 25 micrometres.

4

2. A polymer mixture as claimed in Claim 1, characterised in that the polymer mixture comprises a polyether ester block copolymer as constituent B.

3. A polymer mixture as claimed in Claim 1, characterised in that the polymer mixture comprises a polyester-ester urethane as constituent B.

4. A polymer mixture as claimed in Claim 1, characterised in that the polymer mixture comprises a polyether imide ester as constituent B.

5. A polymer mixture as claimed in Claim 1, characterised in that the polymer mixture comprises
45-70 parts by weight of constituent A
5-25 parts by weight of constituent B,
10-30 parts by weight of constituent C, and
5-15 parts by weight of constituent D
per 100 parts by weight of the sum of the constituents A,B,C and D.

6. A polymer mixture as claimed in Claimn 1, characterised in that the polymer mixture comprises as constituent A a polymer or a copolymer which is built up for more than 70 mol% from units derived from terephthalic acid and butane-1,4-diol.

7. A polymer mixture as claimed in Claim 1, characterised in that the polymer mixture comprises a metal compound which cooperates synergistically with the halogenated flame retardant additive.

8. A polymer mixture as claimed in Claim 1, characterised in that, in addition to the constituents mentioned hereinbefore sub A, B and C, the polymer mixture comprises 1-100 parts by weight of conventional additives per 100 parts by weight of A plus B plus C.

9. A polymer mixture as claimed in claim 1, characterised in that constituent C is a brominated polystyrene or a brominated epoxy resin.

10. Articles formed from the polymer mixture as claimed in Claims 1-8.